Europäisches Patentamt

European Patent Office

Office européen des brevets

(19)

(11) Veröffentlichungsnummer: **0 199 105**

**A1**

(12) # EUROPÄISCHE PATENTANMELDUNG

(21) Anmeldenummer: 86103873.5

(22) Anmeldetag: 21.03.86

(51) Int. Cl.4: **A23L 1/185** , A23L 2/04 , C12C 5/02

(30) Priorität: 10.04.85 DE 3512814

(43) Veröffentlichungstag der Anmeldung:
29.10.86 Patentblatt 86/44

(84) Benannte Vertragsstaaten:
AT BE CH DE FR GB IT LI LU NL SE

(71) Anmelder: **Döhler GmbH**
**Riedstrasse 7-9**
**D-6100 Darmstadt(DE)**

(72) Erfinder: **Back, Werner, Dr.**
**Eibenweg 3a**
**D-6108 Weiterstadt(DE)**

(74) Vertreter: **Werner, Hans-Karsten, Dr. et al**
**Deichmannhaus am Hauptbahnhof**
**D-5000 Köln 1(DE)**

(54) **Alkoholfreie Getränke auf Basis von Cerealien, Verfahren und Mikroorganismen zu ihrer Herstellung.**

(57) Alkoholfreie Getränke auf Basis von Cerealien, welche gewünschtenfalls gehopft, aromatisiert, gesüßt und kohlensäurehaltig sein können, enthalten durch Gärung entstandene Milchsäure, vorzugsweise L(+)-Milchsäure. Für das Verfahren wird vorzugsweise Pediococcus dextrinicus verwendet, insbesondere solche Stämme, die keine unerwünschten Stoffwechselnebenprodukte mit unangenehmer Geschmacksnote, insbesondere kein Diacetyl und Acetoin bilden. Derartige Stämme wurden isoliert und beschrieben.

EP 0 199 105 A1

## Alkoholfreie Getränke auf Basis von Cerealien, Verfahren und Mikroorganismen zu ihrer Herstellung

Gegenstand der Erfindung sind alkoholfreie Getränke auf Basis von Cerealien, insbesondere auf Basis von Malz, welche gewünschtenfalls gehopft, aromatisiert, gesüßt und kohlensäurehaltig sein können. Die Erfindung betrifft weiterhin Verfahren und Kulturstämme zur Herstellung dieser Getränke.

Alkoholfreie Getränke auf Basis von Cerealien sind bisher nur in Form nachträglich vom Alkohol befreiter Biere bekannt. Dabei genügt es, den Alkoholgehalt unter 0,5 Volumen-% zu senken, um diese Getränke als alkoholfreie Biere bezeichnen zu dürfen. Zur Haltbarmachung verschiedener Früchte-und Gemüsearten ist es bekannt, Milchsäurebakterien und die Milchsäuregärung zu verwenden. Es sind auch gemischte Gärungen von Hefen und Milchsäurebakterien bekannt, beispielsweise zur Herstellung von Weißbiertypen. Weiterhin ist bekannt, die Maische mittels Milchsäuregärung anzusäuern und alsdann der eigentlichen Hefefermentation zu unterziehen. Eine reine Milchsäurevergärung von Maischen auf Basis von Malz oder anderen Cerealien ist bisher in der Praxis nicht angewendet worden, weil alle bisher bekannten und technologisch genutzten Milchsäurebakterien in diesem Milieu verschiedene unerwünschte Hauptstoffwechselprodukte und Stoffwechselnebenprodukte bilden und daher zu ungenießbaren Produkten führen.

Aufgabe der vorliegenden Erfindung war es zunächst, neue alkohlfreie Getränke auf Basis von Cerealien, insbesondere auf Basis von Malz, mittels Milchsäuregärung zu entwickeln, welche gewünschtenfalls gehopft, aromatisiert, gesüßt und kohlensäurehaltig sein können, jedoch keine unangenehmen Geschmacksstoffe enthalten. Es galt somit zunächst einmal, milchsäurebildende Bakterienstämme zu finden, welche in Maischen aus Cerealien, insbesondere in Bierwürze, gut wachsen und die hierin hauptsächlich vorhandenen Kohlenstoffquellen, nämlich auch Dextrine, gut und schnell vergären können. Vorzugsweise sollte dabei überwiegend oder ausschließlich die im menschlichen Organismus physiologische L(+)-Milchsäure gebildet werden, jedoch keine geschmacklich nachteiligen bzw. im Geschmacksbild der Bierwürze atypischen Stoffwechselnebenprodukte, insbesondere nahezu kein Diacetyl oder Acetoin.

Zunächst wurde jetzt gefunden, daß einzelne Kulturstämme der Art Pediococcus dextrinicus in Reinkultur gewonnen werden können und allen Anforderungen zur Lösung der erfindungsgemäßen Aufgabe genügen. Die Art Pediococcus dextrinicus wurde kürzlich als eigene Art identifiziert und beschrieben (W. Back, Int. J. Sys. Bacteriol. 28, 1978, Seiten 523-527). Zwei erfindungsgemäß brauchbare Stämme wurden bereits isoliert, nämlich B 1005 und B 1015. Diese Stämme wurden bei der Deutschen Sammlung für Mikroorganismen DSM unter den Nummern 3283 und 3284 hinterlegt. Für das erfindungsgemäße Getränk und das Verfahren zu seiner Herstellung sind prinzipiell alle Stämme der Art Pediococcus dextrinicus sowie vereinzelte andere Milchsäurebakterien wie lactobacillus delbrüeckii geeignet, welche die genannten Anforderungen erfüllen.

Gegenstand der vorliegenden Erfindung sind somit zunächst die alkoholfreien Getränke auf Basis von Cerealien, welche gewünschtenfalls gehopft, aromatisiert, gesüßt und kohlensäurehaltig sein können, und die dadurch gekennzeichnet sind, daß sie durch Gärung entstandene Milchsäure enthalten. Vorzugsweise sollen sie überwiegend oder ausschließlich L(+)-Milchsäure enthalten. Weiterhin sollten sie möglichst keine unerwünschten Stoffwechselnebenprodukte mit unangenehmer Geschmacksnote, insbesondere nahezu kein Diacetyl und Acetoin enthalten.

Als Cerealien kommen in erster Linie Gerstenmalz in Frage, prinzipiell können aber auch andere Cerealien, wie Weizen, Reis, Hirse in Form von Malz oder Grünfrucht verwendet werden. Entscheidend ist, daß die Maischen aus diesen Cerealien überwiegend Dextrine als Kohlenstoffquelle enthalten und sie mit Milchsäurebakterien vergoren werden können.

Bei der Herstellung des erfindungsgemäßen Getränkes auf Basis von Gerstenmalz geht man beispielsweise von in üblicher Weise durch Mälzungs-und Maischprozeß gewonnener Bierwürze aus. Der Stammwürzegehalt kann zwischen 5 und 20, vorzugsweise zwischen 8 und 14 % liegen. Niedrigere Gehalte führen zu sehr verdünnten Getränken, während höhere Stammwürzegehalte zu unnötigen Kosten und Schwierigkeiten bei der Durchführung des Verfahrens führen können. Um Sekundärinfektionen zu vermeiden, wird vorzugsweise in einem geschlossenen Gärgefäß unter einer Kohlensäureatmosphäre oder ständiger Begasung mit Kohlensäure vergoren. Die Gärtemperatur kann im Bereich von 8 bis 50°C liegen. Die günstigsten Temperaturen liegen etwa bei 30 bis 40°C. Durch die bei der Gärung entstehende Milchsäure stellt im allgemeinen ein End-pH von 3,5 bis 4,1 ein. Durch weiteres Absinken des pH-Wertes wird das Wachstum der Bakterien gehemmt. Um die Vergärung der vorhandenen Zucker, Dextrine und Stärke möglichst weitgehend durchführen zu können, kann es empfehlenswert sein, den pH-Wert auf 4,0 bis 4,5 zu puffern.

Der Resteextrakt, insbesondere die vorhandene Menge an Zuckern, Dextrinen und Stärke nach der Vergärung, ist abhängig von den Gärbedingungen, insbesondere der Temperatur, dem pH-Wert, der Gasatmosphäre sowie von der Beschaffenheit der Würze und vom verwendeten Bakterienstamm. Ein höherer Restzuckergehalt kann beispielsweise erzielt werden, indem der Gärprozeß durch vorzeitige Abtrennung der Bakterien oder durch Kochen gestoppt wird. Derartige Gärsubstrate sind selbstverständlich wesentlich infektionsanfälliger als solche, in denen kaum noch vergärbare Zucker vorhanden sind.

Die vergorene Würze wird vorzugsweise anschließend gekocht und gewünschtenfalls gehopft, wobei die in der Brauerei üblichen Verfahrensmaßnahmen zur Anwendung kommen können. Auch die nachfolgende Trub-und Hopfenabscheidung wird in üblicher Weise vorgenommen. Anschließend werden die groben Trubteile und Organismenzellen durch Sedimentation, Filtration oder Zentrifugation abgetrennt.

Sofern man das Getränk mit Kohlensäure versetzen will, ist es empfehlenswert, vorher intensiv zu kühlen, da dies das Bindevermögen für Kohlensäure und die Trubstabilität erhöht. Gewünschtenfalls ist auch eine Kohlensäurewäsche aus geschmacklichen Gründen vorteilhaft. Die anschließende Filtration und Abfüllung kann wiederum nach den in der Brauerei üblichen Verfahren erfolgen. Gewünschtenfalls besteht die Möglichkeit einer Aromatisierung unmittelbar vor der Abfüllung beispielsweise mit Hilfe einer Aromavorlage im Drucktank. Um das erfindungsgemäße Getränk geschmacklich abzurunden, ist es prinzipiell möglich, auch nachträglich zu süßen. Eine derartige Süßung kann beispielsweise durch Glucose--oder Fruktosesirup erfolgen.

Eine weitere vorteilhafte Variante des erfindungsgemäßen Verfahrens besteht darin, beispielsweise nach der Kohlensäurewäsche die Milchsäurewürze mittels eines Verdampfers auf die für Fruchtsaftgrundstoffe übliche Konzentration einzudampfen. Hierdurch wird eine gute biologische Stabilität des Konzentrats gewährleistet. Dieses Konzentrat kann dann dem Bedarf entsprechend in den üblichen Abfüllbetrieben mit Wasser rückverdünnt werden. Ggf. wird nach der Rückverdünnung eine weitere Filtration wegen der bei Konzentration nachträglich ausgefallenen Eiweißverbindung erforderlich sein. Selbstverständlich kann das erfindungsgemäße Getränk auch nach der Rückverdünnung wieder aromatisiert, gesüßt und mit Kohlensäure versetzt werden.

Die erfindungsgemäßen Getränke sind alkoholfrei, da die verwendeten Bakterienstämme keinen Alkohol bilden. Bei Anwendung von Reinzuchten und Vermeidung von Sekundärinfektionen handelt es sich bei den erfindungsgemäßen Getränken um akoholfreie Getränke, die nicht nur im lebensmittelrechtlichen Sinne (Alkoholgehalt kleiner als 0,5 %), sondern auch im wissenschaftlichen Sinne alkoholfrei sind (Alkoholgehalt 0 %). Prinzipiell ist es natürlich möglich, die erfindungsgemäßen Getränke mit einem normalen Bier zu verschneiden, um dabei zu einem im lebensmittelrechtlichen Sinne alkohlfreien Bier zu kommen. Weiterhin ist es möglich, die erfindungsgemäßen Getränke zu Mischgetränken zu verschneiden nach dem sogenannten "Shandy-Typ".

Ein wesentlicher Vorteil des erfindungsgemäßen Verfahrens besteht darin, daß es unbedenklich in Brauereien und Limonadenbetrieben durchgeführt werden kann, da die erfindungsgemäß verwendeten Stämme weder bier-noch limonadenschädlich sind. Wegen dieser günstigen Eigen - schaften sind sie prinzipiell auch für eine gemischte Gärung bei bestimmten Weißbiertypen sowie für die Ansäuerung von Vorderwürzen geeignet. Die besonderen Vorteile der neuen Bakterienstämme kommen aber insbesondere bei der Herstellung alkoholfreier Getränke zum Tragen. Bei dem erfindunsgemäßen Verfahren wird daher auch vorzugsweise im geschlossenen Fermenter unter Inertgasatmosphäre, vorzugsweise Kohlensäureatmosphäre gearbeitet, da hierbei der unerwünschte Einfluß von Sauerstoff auf die Geschmacksstoffe sowie eine Sekundärinfektion mit aeroben Keimen vermieden werden kann.

Vorzugsweise wird nach dem sogenannten Tandemverfahren gearbeitet. Dazu werden von der vergorenen Würze vor der Weiterverarbeitung größere Mengen, z.B. 20 bis 30%, als Impfmaterial in einen anderen Behälter gepumpt und mit der nächsten Charge vereint. Dadurch wird die Kultur ständig erneuert und bleibt in der logarithmischen Wachstumsphase. Weiterhin gewährleistet diese Verfahrensweise eine schnelle Vergärung und vermindert sich die Gefahr einer Fremdinfektion.

Bei der Vergärung werden Maltose, Maltotriose, Dextrine und nach entsprechender Adaptation auch Stärke vergoren, wobei als Hauptstoffwechselprodukt $L(+)$-Milchsäure entsteht. Für die erfindungsgemäßen Getränke und das erfindungsgemäße Verfahren sind insbesondere solche Stämme geeignet, die bevorzugt in Maischen von Cerealien, insbesondere in Bierwürze wachsen und dabei keine unerwünschten Stoffwechselnebenprodukte mit unangenehmer oder atypischer Geschmacksnote, insbesondere kein Diacetyl oder Acetoin bilden. Auch die Bildung diverser anderer organischer Säuren und Alkohole, Ester und Ketone oberhalb des Geschmacksschwellenwertes ist im allgemeinen unerwünscht.

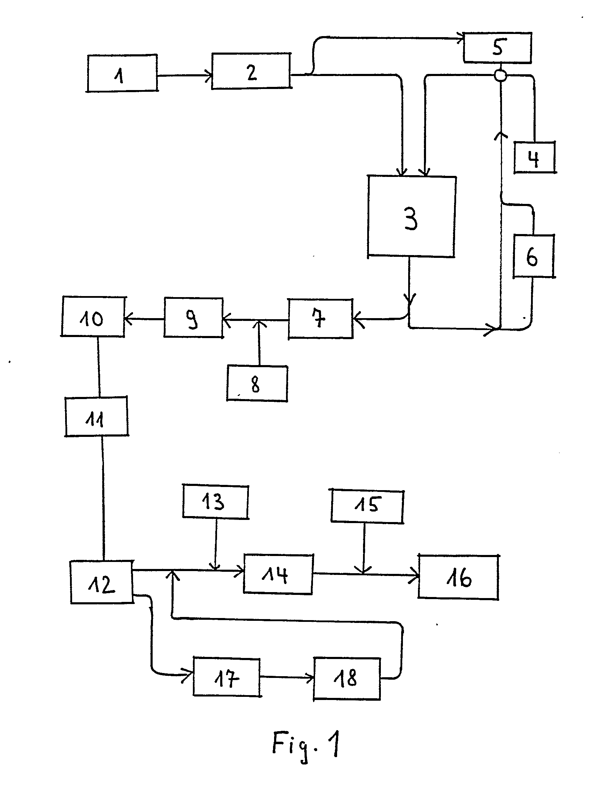

Zur Erzielung eines bierähnlichen Geschmacks erfolgt vorzugsweise eine Kochung mit Hopfen, die jedoch im Gegensatz zum üblichen Brauprozeß erst nach der Vergärung durchgeführt wird. Das erfindungsgemäße Verfahren kann chargenweise, aber auch kontinuierlich durchgeführt werden. Das Fließschema bevorzugter Varianten des erfindungsgemäßen Verfahrens ist in der Fig. 1 näher erläutert. Hierin bedeuten

1) die Mälzerei,

2) der Maischprozeß,

3) der Fermenter,

4) Bakteriensuspension,

5) ein Kochprozeß,

6) eine Kühllagerung,

7) eine Sedimentation und Grobfiltration,

8) der Zusatz von Hopfen,

9) ein Kochprozeß,

10) eine Trub-und Hopfenabscheidung,

11) eine Tiefkühlung,

12) eine Kohlensäurewäsche,

13) eine Imprägnierung mit Kohlensäure,

14) eine Filtration,

15) eine Aromatisierung,

16) die Abfüllung,

17) eine Konzentration im Verdampfer,

18) eine Rückverdünnung mit Wasser.

Wie bereits weiter oben ausgeführt, sind von diesen Schritten erfindungsgemäß zunächst einmal nur die Schritte 1, 2, 3, 4, 7, 9 und 16 notwendig. Die Kochung in der Stufe 5 mit einem Teil der Würze erfolgt zwecks Sterilisierung und Herstellung des Vorrates an Bakteriensuspension 4. Die Kühllagerung 6 erweist sich dann als zweckmäßig, wenn man das Verfahren chargenweise durchführen will und beim kontinuierlichen Verfahren unterbrechen möchte.

Die gewünschtenfalls durchgeführte Hopfung in der Stufe 8 hat den Vorteil, daß das Getränk im Geschmack bierähnlicher wird und gleichzeitig die Gefahr einer nachträglichen Infektion erheblich gesenkt wird. Sofern gehopft wird, ist nach der Kochung eine Trub-und Hopfenabscheidung (10) erforderlich. Sowohl für eine Kohlensäurewäsche wie eine Imprägnierung mit Kohlensäure ist es vorteilhaft, eine Tiefkühlung (11) vorzuschalten. Im allgemeinen wird man vor der Abfüllung (16) das Getränk filtrieren und gewünschtenfalls aromatisieren.

Bei der erfindungsgemäßen Variante zur Herstellung des Getränkes über ein Konzentrat in der Stufe (17) und einer Rückverdünnung in der Stufe (18) wird das Getränk anschließend wieder in üblicher Weise durch die Stufen (14) und (16) geführt, wobei wiederum mit Kohlensäure imprägniert (13) und aromatisiert (15) werden kann.

Wie man diesem Schema entnehmen kann, besteht das erfindungsgemäße Verfahren aus einer Reihe an sich bekannter und üblicher Verfahrensschritte, die in den Einrichtungen nach den Technologien von Brauereien und Limonadeabfüllanlagen durchgeführt werden können. Nur die Reihenfolge gewisser Verfahrensschritte muß zwangsläufig anders gewählt werden, da nur ungehopfte Würze mit den erfindungsgemäßen Bakterienstämmen vergoren werden kann.

Das erfindungsgemäße Getränk kann je nach Verfahrensbedingungen sehr unterschiedliche Konzentrationen und Geschmacksrichtungen aufweisen. Trotzdem handelt es sich in allen Fällen um Getränke, die nur auf natürlichen Grundstoffen aufbauen und eine breite Anwendung finden können.

Besonders bevorzugt sind die Getränke, die durch Zusatz von Hopfen einen bierähnlichen Charakter erhalten und trotzdem als alkoholfreie Getränke mit wertvollen Inhaltsstoffen anzusehen sind.

Die Erfindung ist in den nachfolgenden Beispielen näher erläutert.

Beispiel 1

Gewinnung von Bakterienstämmen der Art Pediococcus dextrinicus.

Nährböden mit Dextrin als einziger Kohlenstoffquelle werden mit pflanzlichem Material verschiedenster Herkunft unter luftarmen Verhältnissen in flüssigem Medium angeimpft und dabei die Milchsäurebakterien angereichert. Durch mehrere übliche Selektionsschritte werden auf Agarnährböden Tetraden bildende Kokken isoliert und dadurch von den ggf. vorhandenen stäbchenförmigen Bakterien abgetrennt. Von den so erhaltenen Tetradenbildnern werden Einzelkolonien angelegt und auf ungehopfte Bierwürze überimpft. Die Gäransätze werden zunächst auf L-(+)-Milchsäure geprüft und alle Stämme eliminiert, die racemische oder D(-)-Milchsäure bilden. Von den Stämmen, die ausschließlich L(+)-Milchsäure liefern, werden Testansätze gefahren und organoleptisch überprüft. Alle Stämme, die unangenehme Geschmacksnoten, insbesondere durch Diacetyl oder Acetoin aufweisen, werden weiterhin eliminert. Die so erhaltenen Stämme von Pediococcus dextrinicus sind prinzipiell geeignet. In der nachfolgenden Tabelle 1 sind die Merkmalskombinationen von Pediococcus dextrinicus im Vergleich zu übrigen Pediococcusarten zusammengestellt.

Hierin bedeutet

- = Reaktion negativ

+ = Reaktion positiv

± = Reaktion variabel

() = Reaktion einer Minderheit
Die Pediococcusarten sind wie folgt numeriert:

Pediococcus pentosaceus = 1)

Pediococcus acidilactici = 2)

Pediococcus parvulus = 3)

Pediococcus inopinatus = 4)

Pediococcus damnosus = 5)

Pediococcus dextrinicus = 6)

Pediococcus halophilus = 7)

## Tabelle 1

| Pediococcus Nr: | 1) | 2) | 3) | 4) | 5) | 6) | 7) |
|---|---|---|---|---|---|---|---|
| **Vergärung von** | | | | | | | |
| Ribose | + | + | − | − | − | − | + |
| Maltose | + | − | + (−) | + | + | + | + |
| Lactose | + (−) | + (−) | − | + | − | ± | ± |
| Melecitose | − | − | − | − | + (−) | − | + (−) |
| Dextrin | − | − | ± | ± | − (+) | + | − (+) |
| Arginin-Spaltung | + | + | − | − | − | − | + |
| **Wachstum bei** | | | | | | | |
| 35° C | + | + | + | + | − | + | + |
| 40° C | + | + | − (+) | − (+) | − | + | − (+) |
| 48° C | − | + | − | − | − | − | − |
| **Wachstum in Gegenwart von** | | | | | | | |
| 5,5 % NaCl | + | + | + | + | ± | + | + |
| 6,5 % NaCl | + | + | + (−) | + (−) | − | − | + |
| 8,0 % NaCl | + | + | − (+) | − (+) | − | − | + |
| 15 % NaCl | − | − | − | − | − | − | + |
| **Wachstum bei pH** | | | | | | | |
| 4,3 | + | + | + | + | + | ± | − |
| 7,5 | + | + | + (−) | + | − | + | + |
| 8,0 | + | + | − | − | − | + | + |
| 9,0 | − | − | − | − | − | − | + |

## Fortsetzung der Tabelle 1

| Pediococcus Nr: | 1) | 2) | 3) | 4) | 5) | 6) | 7) |
|---|---|---|---|---|---|---|---|
| Lactatkonfiguration | DL | DL | DL | DL | DL | L(+) | L(+) |
| elektrophoretische Mobilität der Lactat-Dehydrogenasen (durch-schnitt. Laufwerte) | | | | | | | |
| D-LDH | 1,23 | 1,29 | 1,42 | 1,36 | 1,16 | - | - |
| L-LDH | 1,36 | 1,39 | 0,97 | 1,18 | 0,92 | 1,02 | 0,82 |
| L-LDH aktivierbar durch FDP | - | - | - | - | - | + | - |
| G+C Mol% | 38 | 42–44 | 40–41 | 39 | 38 | 40 | 34–36 |

Beschreibung der hinterlegten Stämme

In der Tabelle 2 sind variable Merkmale der bisher erhältlichen Pediococcus dextrinicus-Stämme zusammengestellt. Hierin bedeutet wiederum

+ = Reaktion positiv

- = Reaktion negativ

s = Reaktion schwach oder langsam

Die Pediococcus dextrinicus-Stämme sind wie folgt numeriert:

DSM 2033

= ATCC 33087 = 1)

NCDO 1249, BS 8a = 2)

DMS 20293, B 150a, B 151b, B 371a = 3)

S 2a, S 2b = 4)

S 14a = 5)

BS 1b, BS 7a = 6)

T 3a, T 3c = 7)

T 5a = 8)

NDCO 1560 = 9)

NCDO 1247 = 10)

B 1005 (DSM 3283) = 11)

## Tabelle 2

| Pediococcus dextrinicus Stamm Nr: | 1) | 2) | 3) | 4) | 5) | 6) | 7) | 8) | 9) | 10) | 11) |
|---|---|---|---|---|---|---|---|---|---|---|---|
| Wachstum in Würze | s | s | s | s | + | s | s | s | s | s | ++ |
| Voges-Proskauer-Test | – | – | – | – | – | s | – | – | + | s | – |
| Wachstum bei 43° C | + | + | s | + | + | s | + | + | + | + | – |
| 45° C | – | s | – | – | – | – | s | – | + | – | – |
| Wachstum bei pH 4,5 | s | – | + | s | + | s | s | – | s | s | + |
| Wachstum in Gegenwart von 6 % NaCl | + | + | + | s | s | s | + | + | + | + | + |
| Vergärung von Ribose | – | – | – | – | – | – | – | – | s | – | – |
| Trehalose | s | – | – | – | – | – | s | + | – | + | – |
| Saccharose | s | – | + | s | s | – | + | + | s | + | s |
| Lactose | s | + | – | + | + | – | – | s | + | s | – |
| Stärke | + | + | + | + | + | + | s | + | s | + | + |
| Inulin | s | – | – | – | – | – | + | + | – | + | – |
| –Methyl-glucosid | s | s | + | – | s | s | + | – | s | + | + |

Ausführliche Beschreibung von Pediococcus dextrinicus B 1015 (DSM 3284)

Wegen folgender Eigenschaften ist der Organismus zur Gattung Pediococcus zu zählen:

Tetradenbildende Kokken, unbeweglich, Grampositiv, Katalasenegativ, Benzidintest negativ, keine Sporenbildung, fakultativ anaerob, Hauptstoffwechselprodukt Milchsäure (mehr als 95 % liegen als Milchsäure vor: homofermentativ).

Die Zugehörigkeit zur Art Pediococcus dextrinicus und die Abgrenzung dieser Art zu allen anderen bekannten Pediococcus-Arten ergibt sich aus der Übersicht der Merkmale in Tabelle 1.

Die Abgrenzung des Stammes B 1015 zu den anderen erhältlichen Pediococcus dextrinicus-Stämmen ist aus Tabelle 2 ersichtlich. Wichtig für die hier beschriebene Technologie ist die Fähigkeit von B 1015, in Würze und bei niedrigen pH-Werten (4,4) gut zu wachsen, während sich die meisten übrigen Stämme unter diesen Bedingungen nur - schwach oder überhaupt nicht vermehren können.

In folgenden weiteren Merkmalen stimmt B 1015 mit den übrigen dextrinicus-Stämmen überein:

Zellendurchmesser 0,8 bis 1,1 µm; die Zellen liegen einzeln, in Paaren, in Tetraden oder größeren Ansammlungen vor, gelegentlich auch in kurzen Ketten. Die Kolonien auf MRS-Agar (Man, J.C. de, M. Rogosa und M.E. Sharpe, J.Appl.Bacteriol. 23, 130-135, 1960) sind flach bis leicht konvex, rund, undurchsichtig, glänzend, haben einen Durchmesser von 0,5 bis 2,5 mm und sind weißlich. Schleim wird nicht produziert. Wachstum findet in aerober und anaerober Atmosphäre statt (in der Stichkultur Wachstum entlang des gesamten Stichkanals).

Wachstum findet statt bei 8 bis 40° C. Das Temperaturoptimum liegt bei 30 bis 35° C. Über 45° C findet kein Wachstum statt. NaCl wird bis 6 % toleriert. Im pH-Bereich von 4,7 bis 8,3 findet Vermehrung statt. Bei pH 4,0 und 8,6 war kein Wachstum. Der pH-Wert in MRS-Bouillon wird auf pH 3,5 bis 4,3 gesenkt. Negativ sind Nitrat-Reduktion, Gelatineverflüssigung, Ureaseaktivität, Arginin- und Hippurat-Spaltung sowie Gasbildung aus Glucose oder Maltose.

Die Bakterien sind homofermentativ und bilden aus Glucose L(+)-Milchsäure als Hauptstoffwechselprodukt. Aus folgenden C-Quellen wird Säure produziert:

Glucose, Fructose, Mannose, Galaktose, Maltose, Cellobiose, Maltotriose, Dextrin, Stärke - (teilweise langsam), Salicin, Amygdalin und Natriumgluconat (teilweise langsam).

Keine Säure wird gebildet aus Arabinose, Xylose, Rhamnose, Sorbose, Melibiose, Melezitose, Raffinose, Glycerin, Mannit, Sorbit, meso-Inosit, meso-Dulcit, Xylit, Adonit, Erythrit und Galakturonsäure.

Die L-Lactatdehydrogenase ist eine spezifische D-LDH und ist aktivierbar mit Fructose-1,6-di-Phosphat (FDP). Der G+C-Gehalt der DNS beträgt 40 Mol%.

Bestimmungsmethoden für die angegebenen Merkmale

Konfiguration der Milchsäure:

Die Konfiguration der Milchsäure wurde mit sterospezifischen Lactatdehydrogenasen im optischen Test bestimmt (vgl. Hohorst, H.J.: L-Lactatbestimmung in: Methoden der enzymischen Analyse (H.U. Bergmeyer 266-270, Weinheim, 1966).

Aktivierbarkeit der L-LDH durch FDP:

Die L-LDH wurde im partikelfreien Homogenisat der Zellen untersucht. Dazu wurden L-Lactat und Coenzym I (Nicotinamid-Adenin-Dinucleotid = NAD$^+$) zugesetzt und die Extinktionsänderung bei 366 nm, hervorgerufen durch Reduktion von NAD, gemessen (vgl. Hohorst, a.a.O.). Zusätzlich wurde der Einfluß des FDP-Zusatzes auf die Reaktionsgeschwindigkeit geprüft (vgl. De Vries, W. Kapteign, W.M.C. Van der Beek, E.G. und A.H. Stouthamer: Molar growth yields and fermentation balances of Lactobacillus casei L3 in batch cultures and in continuous cultures. J.Gen. Microbiol. 63, 333-345 - (1979)).

Elektrophoretische Mobilität der L-LDH:

Der partikelfreie Zellsaft wurde mittels Polyacrylamid-Gelelektrophorese untersucht (vgl. Stetter, K.O.: Physiologisch-biochemische Untersuchungen zur Bildung von Milchsäureisomerengemischen bei Lactobacillen. Dissertation T.U. München S. 44-55, 1973).

Peptidoglycantyp:

Die Bestimmung der Aminosäurezusammensetzung der Zell wände erfolgte nach Schleifer und Kandler (vgl. Schleifer, K.H. und O. Kandler: The peptidoglycan types of bacterial cell walls and their taxonomic implications. Bacteriol. Rev. 36, 407-477, 1972).

G+C-Anteil der DNS:

Der Gehalt von Guanin (G) und Cytosin (C) in der Desoxyribonucleinsäure der Zellen wurde mit Hilfe der mittleren Schmelztemperatur ermittelt - (vgl. Marmur, J. und Doty, P.: Determination of the base composition of deoxyribonucleic acid from its thermal denaturation temperature. J.Mol.Biol. 5, 109, 1962). Die Fehlerbreite der Bestimmung beträgt ± 1 %.

Wachstumstest:

Das Wachstum bei verschiedenen Temperaturen wurde nach viertägiger Inkubation in MRS-Bouillon überprüft (Man, J.C. de, Rogosa, M. and M.E. Sharpe: A medium for the cultivation of Lactobacilli. J.Appl. Bact. 23, 130-135, 1960). Zur Ermittlung der Salztoleranz wurden die entsprechenden NaCl-Konzentrationen dem MRS-Bouillon zugesetzt. Für das Wachstum bei verschiedenen pH-Werten wurden in MRS-Bouillon mit NaOH-bzw. HCl-Lösungen die verschiedenen pH-Stufen eingestellt.

Vergärung verschiedener C-Quellen:

Um das Gärverhalten in Gegenwart verschiedener C-Quellen zu testen, wurden dem MRS-Bouillon statt Glucose die jeweiligen oben genannten Zucker, Polysaccharide, Zuckeralkohole und organischen Säuren zugesetzt. Als Säuerungs-indikator diente Chlorphenolrot.

Die Durchführung der physiologischen Teste erfolgte gemäß W. Back, Zur Taxonomie der Gattung Pediococcus, Brauwissenschaft 31, 1978, Seiten 237-250.

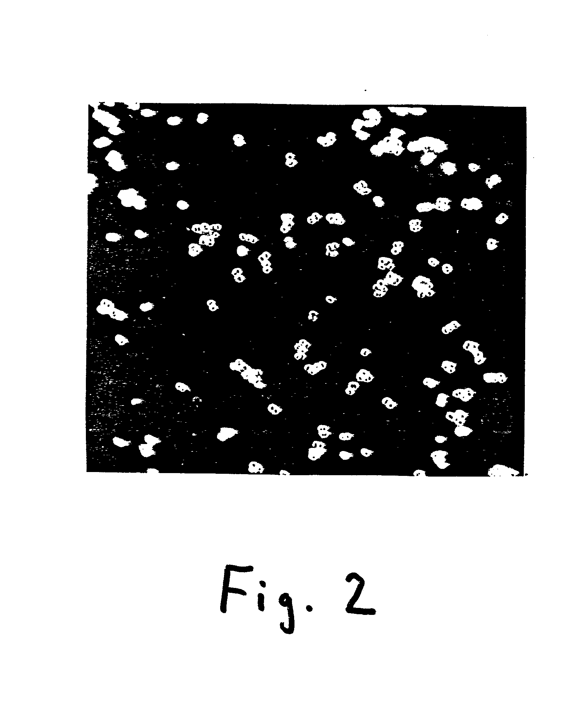

In Fig. 2 ist das Erscheinungsbild dieses Mikroorganismus in MRS-Bouillon bei der Vergrößerung ca. 1300 x wiedergegeben.

Beispiel 2

Herstellung eines gehopften Getränkes.

Aus einem üblichen Mälzereiprozeß stammendes Gerstenmalz wird in der in Brauereien üblichen Weise dem Maischprozeß unterworfen. Es entsteht eine Vorderwürze mit 11 % Stammwürze. Dieser wird ein Inoculum des Stammes B 1015 (log-Phase) 20 bis 30 % zugesetzt bei einer Gärtemperatur von 35° C unter Rühren und $CO_2$-Begasung. Nach ca. 36 Stunden erfolgt eine Hopfenkochung für 2 Stunden, wobei die Menge so gewählt wird, daß eine Hopfen α-Säuremenge im Fertiggetränk von ca. 25 mg/l verbleibt. Es wird danach auf 5° C abgekühlt, in üblicher Weise über Kieselgur-oder Filter-Schichten filtriert, mit 5 g/l Kohlensäure karbonisiert und im Drucktank mit natürlichem Bieraroma 1:1000 sowie 2,5 % Fructosesirup versetzt und abgefüllt. Es entsteht ein Getränk mit angenehm herb-säuerlichem Geschmack, das bierähnlich ist, jedoch alkoholfrei.

Beispiel 3

Gerstenmalz und Rohfrucht werden im Verhältnis 1:1 miteinander gemischt und zu einer Vorderwürze von 10 % Stammwürze verarbeitet. Dieses wird wie in Beispiel 2 beschrieben mit einem Inoculum des Stammes B 1015 versetzt und ca. 40 Stunden gerührt.

Es wird wie im Beispiel 2 mit Hopfen 2 Stunden gekocht, wobei ein Gehalt von α-Säure von ca. 20 mg/l im Fertiggetränk entsteht. Es wird wiederum auf 5° C abgekühlt und über Kieselgur/Schichten filtriert. Danach wird mit 5 g/l Kohlensäure karbonisiert, mit 4 % Fructosesirup gesüßt, ein Kräuter-und Citrus-Aroma-Gemisch zugegeben und abgefüllt. Eine weitere Probe dieses Getränkes wurde mit 20 % Bier von Pils-Typ verschnitten und ergab ein Getränk mit einem Alkoholgehalt von 0,5 %.

**Ansprüche**

1. Alkoholfreie Getränke auf Basis von Cerealien, welche gewünschtenfalls gehopft, aromatisiert, gesüßt und kohlensäurehaltig sein können, dadurch gekennzeichnet, daß sie durch Gärung entstandene Milchsäure enthalten.

2. Getränke gemäß Anspruch 1, dadurch gekennzeichnet, daß sie überwiegend L(+)-Milchsäure enthalten.

3. Getränke gemäß Anspruch 1 oder 2, dadurch gekennzeichnet, daß sie keine unerwünschten Stoffwechselnebenprodukte mit unangenehmer Geschmacksnote, insbesondere nahezu kein Diacetyl und Acetoin enthalten.

4. Getränke gemäß einem der Ansprüche 1 bis 3, dadurch gekennzeichnet, daß als Cerealie Gerstenmalz verwendet wird.

5. Verfahren zur Herstellung alkoholfreier Getränke auf Basis von Cerealien, welche gewünschtenfalls gehopft, aromatisiert, gesüßt und kohlensäurehaltig sein können, dadurch gekennzeichnet, daß eine Maische aus Cerealien ausschließlich mit Milchsäurebakterien vergoren wird.

6. Verfahren gemäß Anspruch 5, dadurch gekennzeichnet, daß eine Maische aus Gerstenmalz eingesetzt wird.

7. Verfahren gemäß Anspruch 5 oder 6, dadurch gekennzeichnet, daß als Milchsäurebakterien nicht bierschädliche Stämme der Art Pediococcus dextrinicus verwendet werden.

8. Verfahren gemäß Anspruch 5 oder 6, dadurch gekennzeichnet, daß als Milchsäurebakterien nicht bierschädliche Stämme der Art lactobacillus delbrüeckii verwendet werden.

9. Verfahren gemäß einem der Ansprüche 5 bis 7, dadurch gekennzeichnet, daß als Milchsäurebakterien Stämme der Art Pediococcus dextrinicus verwendet werden, die als Hauptstoffwechselprodukt L(+)-Milchsäure, aber keine unerwünschten Stoffwechselnebenprodukte mit unangenehmer Geschmacksnote, insbesondere nahezu kein Diacetyl und Acetoin bilden.

10. Verfahren gemäß einem der Ansprüche 5 bis 9, dadurch gekennzeichnet, daß die vergorene Maische anschließend gekocht, gewünschtenfalls gehopft, nach Abscheidung von Trübstoffen gewünschtenfalls aromatisiert, gesüßt und mit Kohlensäure versetzt wird.

11. Verfahren gemäß einem der Ansprüche 5 bis 10, dadurch gekennzeichnet, daß die Milchsäurewürze gegebenenfalls nach einer Kohlensäurewäsche zu einem Konzentrat eingedickt wird, welches später nach Bedarf in üblicher Weise mit Wasser rückverdünnt, gewünschtenfalls filtriert, aromatisiert, gesüßt und mit Kohlensäure versetzt wird.

12. Verfahren gemäß einem der Ansprüche 5 bis 7 und 9 bis 11, dadurch gekennzeichnet, daß man als Milchsäurebakterien einen der Stämme B 1005 (DSM 3283)

oder B 1015 (DSM 3284)

verwendet.

13. Verfahren gemäß einem der Ansprüche 5 bis 12, dadurch gekennzeichnet, daß man eine Bierwürze mit einem Stammwürzegehalt von 6 bis 14 % verwendet und die Gärung im Temperaturbereich von 8 bis 50° C durchführt.

14. Kulturstämme der Art Pediococcus dextrinicus, welche praktisch ausschließlich L(+)-Milchsäure, aber keine unerwünschten Stoffwechselnebenprodukte mit unangenehmer Geschmacksnote, insbesondere nahezu kein Diacetyl und Acetoin bilden.

15. Kulturstämme nach Anspruch 14, erhältlich dadurch, daß man aus spontan gärenden Substraten von Cerealien, die als Kohlenstoffquelle überwiegend oder ausschließlich Dextrine enthalten, Milchsäurebakterien anreichert, durch mehrere Selektionsschritte tetradenbildende Kokken auf Agarnährböden isoliert, gleichzeitig stäbchenförmige Bakterien eliminiert und von den Tetradenbildnern diejenigen weiterzüchtet, die nur L(+)-Milchsäure bilden, keine unerwünschten Stoffwechselnebenprodukte mit unangenehmer Geschmacksnote bilden, und in ungehopfter Bierwürze wachsen können.

16. Kulturstämme B 1005 (DSM 3283)

und B 1015 (DSM 3284)

der Art Pediococcus dextrinicus.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 212 263 (P. BERDELLE-HILGE)<br><br>* Ansprüche 1, 5, Seite 1, Absatz 1, Seite 4, Absatz 4, Seite 5, Absatz 1 *<br>---| 1,3-5, 6,10, 13 | A 23 L 1/185<br>A 23 L 2/04<br>C 12 C 5/02 |
| X | DE-C- 890 634 (B. RAACK)<br>* Anspruch, Seite 2, Absätze 2, 3 *<br>--- | 1,5 | |
| X | DE-C- 715 027 (AG HACKERBRÄU)<br>* Anspruch 1, Seite 1, rechte Spalte, Beispiel 3 *<br>--- | 1,5 | |
| Y | DE-A-3 043 083 (J.G. BRUMMER)<br>* Ansprüche *<br>--- | 1,4-6 | |
| Y | DE-A-3 122 058 (J.G. BRUMMER)<br>* Anspruch 1, Seite 4, Absatz 3 *<br>--- | 1,4-6 | **RECHERCHIERTE SACHGEBIETE (Int. Cl.4)** |
| A | FR-A-1 119 206 (W. EGGER-LAURIN)<br>* Seite 1, rechte Spalte, Absätze 2, 3, Zusammenfassung *<br>--- | 1,3,5 | A 23 L 1/00<br>A 23 L 2/00<br>C 12 C 5/00 |
| A | US-A-3 615 697 (C.M. HOLLENBECK)<br>* Tafel 5, Anspruch 5 *<br>--- -/- | 8 | |

Der vorliegende Recherchenbericht wurde für alle Patentansprüche erstellt.

| Recherchenort | Abschlußdatum der Recherche | Prüfer |
|---|---|---|
| BERLIN | 03-07-1986 | SCHULTZE D |

Europäisches
Patentamt

**EUROPÄISCHER RECHERCHENBERICHT**

Nummer der Anmeldung

EP 86 10 3873

| | **EINSCHLÄGIGE DOKUMENTE** | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | DE-C- 217 844 (A. EISENBERG)<br><br>* Anspruch *<br><br>--- | | |
| D,A | INTERNATIONAL JOURNAL OF SYSTEMATIC BACTERIOLOGY, Band 28, Nr. 4, Oktober 1978, Seiten 523-527; W. BACK "Elevation of Pediococcus cerevisiae subsp. dextrinicus Coster and White to Species Status [Pediococcus dextrinicus (Coster and White) comb. nov.]"<br><br>----- | | |
| | | | RECHERCHIERTE SACHGEBIETE (Int. Cl.4) |
| | Der vorliegende Recherchenbericht wurde für alle Patentansprüche erstellt. | | |

| Recherchenort<br>BERLIN | Abschlußdatum der Recherche<br>03-07-1986 | Prüfer<br>SCHULTZE D |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82